# EUROPEAN PATENT APPLICATION

(11) **EP 1 992 872 A2**
(43) Date of publication of application: **19.11.2008**
(21) Application number: 08251731.9
(22) Date of filing: 16.05.2008
(51) Int. Cl.: F21V 8/00, G02B 6/00

(54) **Light extraction film system**

(30) Priority: 18.05.2007 US 750384
(71) Applicant: Rohm and Haas Denmark Finance A/S, 2100 Copenhagen (DK)
(72) Inventor: Rankin, Charles M. Jr, Penfield, New York 14526 (US); Aylward, Peter T., Hilton, New York 14468 (US); Gates, Leonard S., Holley, New York 14470 (US); Sudol, Ronald J., Rochester, New York 14618 (US)
(74) Representative: Kent, Venetia Katherine

(57) **Abstract**

A backlight comprises in order a lightguide plate (12) with a sidelit light source (14) and bonded thereto a light extraction unit containing in order from the lightguide plate (12), a first polymeric layer (130), an adhesive layer (140), a second polymeric layer (38) bearing features (26) at least partly embedded in the adhesive layer (140) wherein the materials of the first polymeric layer (130), the adhesive layer (140), and the second polymeric layer (38) differ by less than 0.05 in refractive index, the interstitial regions between the non-embedded portions of the features containing a material having a refractive index at least 0.1 lower than that of the material comprising the features.

## Description

### FIELD OF THE INVENTION

The present invention generally relates to a light-extraction film system and process, with emphasis on how to create a light extracting film using an arrangement of light extracting structures and optical coupling for conditioning illumination for use in display and lighting applications.

### BACKGROUND OF THE INVENTION

While liquid crystal displays (LCDs) offer a compact, lightweight alternative to cathode ray tube (CRT) monitors, there are many applications for which LCDs are not satisfactory due to a low level of brightness, or more properly, luminance. The transmissive LCD that is used in known laptop computer displays is a type of backlit display, having a light-providing surface positioned behind the liquid crystal (LC) array for directing light outwards, towards the LCD. The light-providing surface itself provides illumination that is essentially Lambertian, having an essentially constant luminance over a broad range of angles.

With the goal of increasing on-axis and near-axis luminance, a number of brightness enhancement films have been proposed for extracting a portion of this light having Lambertian distribution toward normal, relative to the display surface. There have been many proposed solutions for brightness or luminance enhancement for use with LCD displays and with other types of backlit display types.

U.S. Patent No. 6,111,696 (Allen et al.) describes a brightness enhancement film for a display or lighting fixture. The surface of the optical film facing the illumination source is smooth and the opposite surface has a series of structures, such as triangular prisms, for redirecting the illumination angle. U.S. Patent No. 5,629,784 (Abileah et al.) describes various embodiments in which a prism sheet is employed for enhancing brightness, contrast ratio, and color uniformity of an LCD display of the reflective type. The brightness enhancement film is arranged with its structured surface facing the source of reflected light for providing improved luminance as well as reduced ambient light effects. U.S. Patent No. 6,356,391 (Gardiner et al.) describes a pair of optical turning films for redirecting light in an LCD display, using an array of prisms, where the prisms can have different dimensions.

U.S. Patent No. 6,280,063 (Fong et al.) describes a brightness enhancement film with prism structures on one side of the film having blunted or rounded peaks. U.S. Patent No. 6,277,471 (Tang) describes a brightness enhancement film having a plurality of generally triangular prism structures having curved facets. U.S. Patent No. 5,917,664 (O'Neill et al.) describes a brightness enhancement film having "soft" cutoff angles in comparison with known film types, thereby mitigating the luminance change as viewing angle increases.

While known approaches, such as those noted above, provide some measure of brightness enhancement at low viewing angles, these approaches have certain shortcomings. Some of the solutions noted above are more effective for redistributing light over a preferred range of angles rather than for extracting light toward the normal for best on-axis viewing. These brightness enhancement film solutions often exhibit a directional bias, working best for extracting light in one direction. For example, a brightness enhancement film may redirect some of the light in the vertical direction to relatively high off-axis angles that is out of the desired viewing cone. In another approach, multiple orthogonally crossed sheets are overlaid in order to redirect light in different directions, typically in both the horizontal and vertical directions with respect to the display surface. Necessarily, this type of approach is somewhat of a compromise; such an approach is not optimal for light in directions diagonal to the two orthogonal axes. In addition, such known films typically use "recycling" in which the light is reflected back through the backlight module multiple times in an effort to increase brightness. However, some of the reflected light is absorbed by materials and lost in reflection during recycling.

As discussed above, brightness enhancement layers have been proposed with various types of refractive surface structures formed atop a substrate material, including arrangements employing a plurality of protruding prism shapes, both as matrices of separate prism structures and as elongated prism structures, with the apex of prisms both facing toward and facing away from the light source. For the most part, these films exhibit directional bias, with some of the light poorly directed.

Certain types of light extracting layers rely on Total Internal Reflection (TIR) effects for extracting light. These layers include prism, parabolic or aspheric structures, which re-direct light using TIR. For example, U.S. Patent No. 5,396,350 to Beeson et al., describes a backlight apparatus comprising a slab waveguide and an array of microprisms attached on one face of the slab waveguide by using an adhesive to directly couple the microprisms and the slab waveguide and further securing prisms to a backing layer by a second layer of adhesive WO 98/22749 discloses a method for coupling light out of a light guiding device but it does it without using an adhesive. U.S. Patents No. 5,739,931 and No. 5,598,281 to Zimmerman et al. describe illumination apparatus for backlighting, using arrays of microprisms and tapered optical structures. U.S. Patent No. 5,761,355 to Kuper et al. describes arrays for use in area lighting applications, wherein guiding optical structures employ TIR to redirect light towards a preferred direction. U.S. Patent No. 6,129,439 to Hou et al. describes an illumination apparatus in which microprisms utilize TIR for light redirection. Japanese Laid-open Patent Publication No. 8-221013 entitled "Plane Display Device And Backlight Device For The Plane Display Device" by Yano Tomoya (published 1996) describes an illumination apparatus having collimating curved facet projections for light redirection utilizing TIR. U.S. Patent No. 6,425,675 to Onishi et al., using curved facets similar to those originally described in the Tomoya 8-221013 disclosure, describes an illumination apparatus in which a light output plate also has multiple curved facet projections with their respective tips held in tight contact with the light exit surface of a light guide member.

As can be appreciated from the above description, known light extracting layers for optical displays have largely been directed to improving brightness of a display, typically over a narrow range of angles about a normal viewing axis. However, spatial uniformity of the light over the display surface is also important, helping to ensure uniform display brightness. Existing light extracting layers, in an effort to achieve higher on-axis brightness, often compromise display uniformity so that, for example, an LC display appears very bright when viewed from a normal direction but is dim when viewed from off-normal angles.

In addition to improving the spatial uniformity of light in a display, light extracting layers should also not create appreciable interference effects such as Moiré effects. As is known, the spacing or pitch of the brightness enhancement film may be nearly commensurate with elements of the LC panel. This can result in Moiré fringes in the image, which are undesirable.

For display applications in particular, it is often desirable for a light extracting article to redistribute light over a range of viewing angles. Some solutions, such as the light output plate described in the Tomoya 8-221013 and subsequent '675 Onishi et al. disclosures cited above, are directed toward maximizing the on-axis illumination, rather than providing illumination over a broader range of angles. Embodiments of these solutions, such as some of those described in the '675 Onishi et al. disclosure, may provide a somewhat broader viewing angle, but at the expense of on-axis light, so that off-axis light levels actually exceed the on-axis levels. With such distribution, there is higher brightness when the display is viewed from an oblique angle than from an on-axis position, an undesirable condition leading to hot spots and other illumination nonuniformities.

A number of patent disclosures, such as the Tomoya 8-221013 and '675 Onishi et al. disclosures cited above, employ films having projecting structures and specify that these structures have one or more curved surfaces. While the use of a curved surface for TIR may be useful for providing on-axis light redirection, the design of curved projections for obtaining light over a broader range of angles can be more difficult. Moreover, curved surfaces themselves can prove to be difficult to fabricate, particularly at the dimensional scale that is needed for structures of a light-redirecting film.

Light redirecting must be optically coupled to their corresponding light guiding component in some way. Embodiments using structures with flat light input surfaces can be optically coupled simply by physical contact with the light guide, provided that this contact is maintained. In U.S. Patent No. 5,949,933 (Steiner et al) describes an optical illumination system containing a waveguide and microprisms, which are optically coupled.

The Onishi '675 disclosure cited above describes using two adhesive layers on opposite sides of an intermediate film. The flat input surfaces are in optical contact with the light guide through the two layers of adhesive and the intermediate film, and are not embedded in the first layer of adhesive. The method described by Ohishi et al teaches that in order to prevent the tips of the projections of the light output plate from being embedded in the bonding layer, the bonding agent is semi-hardened beforehand and, after the bonding layer and the tips of the projections are brought to a tight contact each other, the bonding agent is hardened completely. The use of a two-step hardening process, as described above, can increase the cost and complexity of fabrication.

U.S. Patent No. 6,846,089 and U.S. Pending Patent Application 2005/0134963 A1(Svenson et al)describe a method for stacking surface structured optical films in which the structured surface of one optical film is bonded to an opposing surface of second optical film using a layer of adhesive by penetrating the structured surface into the adhesive layer to a depth less than a feature height of the structured surface.. The method of stacking optical films comprises pressing prismatic ribs of a prisimatically ribbed first optical film into a layer of adhesive on the surface of a second optical film. However, Stevenson et al do not foresee the need to use a carrier film to adhesively attach the film stack to wave lightguide plate for optical coupling.

What is needed is a backlight and a low cost simplified process for optically coupling a light extracting film to a light guide.

### SUMMARY OF THE INVENTION

The invention provides a backlight comprising in order a lightguide plate with a sidelit light source and containing, in order from the lightguide plate, a first polymeric layer, an adhesive layer, a second polymeric layer bearing features at least partly embedded in the adhesive layer wherein the materials of the first polymeric layer, the adhesive layer, and the second polymeric layer differ by less than 0.05 in refractive index, the interstitial regions between the non-embedded portions of the features containing a material having a refractive index at least 0.1 lower than that of the material of the features.

A process for making the backlight comprises
(a) applying a bonding material to a light guide for accepting light from at least one light source;
(b) coating of an adhesive on the surface of a first polymeric film;
(c) providing a light extracting second polymeric film having an input surface that comprises a plurality of light extracting features separated by regions of index of refraction lower than that of the features;
(d) embedding at least a portion of the light extracting features of the light extracting second polymeric film of step (c) in the adhesive of step (b);
(e) affixing the bonding material of step (a) to the non-adhesive side of the first polymeric film of step (b).

The backlight and process provides a low cost simplified process for optically coupling a light extracting film to a light guide.

### BRIEF DESCRIPTION OF THE DRAWINGS

The invention is best understood from the following detailed description when read with the accompanying drawing figures. It is emphasized that the various features are not necessarily drawn to scale. In fact, the dimensions may be arbitrarily increased or decreased for clarity of discussion. Wherever practical, like reference numerals refer to like elements.
Fig. 1 is a cross sectional view of an illumination apparatus using a light extracting film according to the present invention.
Fig. 2 is a cross-section view of a light extracting feature inserted into an adhesive layer and registered against the light guide.
Fig. 3 is a perspective view of an illumination apparatus using the light extracting film of the present invention.
Fig. 4 is a perspective view of a display device in accordance with an example embodiment.
Fig.5 is a process flow diagram for a manufacturing process of a Light Extraction Film for film in wound roll form.
Fig.6 is a process flow diagram for a manufacturing process of a Light Extraction Film for film in sheet form.
Fig.7 is a process flow diagram for a two-step path manufacturing process of a Light Extraction Film.
Fig. 8 is an illumination apparatus

### DETAILED DESCRIPTION OF THE INVENTION

In the following detailed description, for purposes of explanation and not limitation, example embodiments disclosing specific details are set forth, in order to provide a thorough understanding of the present teachings. However, it will be apparent to one having ordinary skill in the art that other embodiments that depart from the specific details disclosed herein are possible. Moreover, descriptions of well-known devices, methods, and materials may be omitted so as to not obscure the description of the example embodiments. Nonetheless, such devices, methods, and materials that are within the purview of one of ordinary skill in the art may be used in accordance with the example embodiments.

This invention provides a simplified and integrated light extracting film system that leads to multiple easy manufacturing processes and a lower cost product. This invention also maximizes optical efficiency so as to enhance brightness as well as viewing angle.

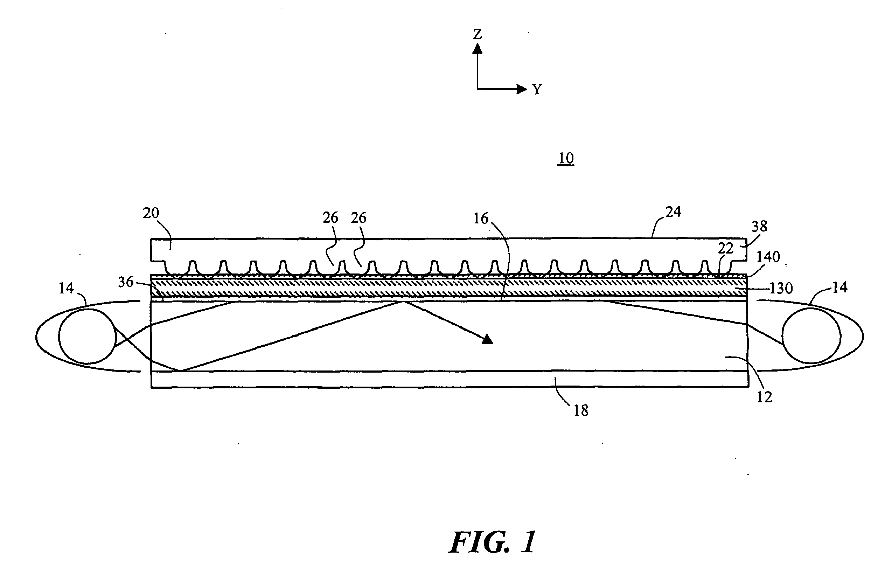

Fig. 1 is a cross-sectional view of an illumination apparatus 10 having a light extracting film 20 coupled to an adhesive layer 140 and a first polymeric film 130. The first polymeric film 130 can be made of any thin, transparent polymeric material including flexible polyethylene terephthalate (PET), polycarbonate, PMMA, polysulfone or other transparent material that has a thickness between 20 and 250 microns. In an exemplary embodiment, first polymeric film can be a 125-micron thick sheet of heat set polyester film base. Heat set polyester are desirable for their relatively low thermally induced dimensional change. In one embodiment, this assembly is bonded or otherwise optically coupled to the top surface 16 of a light guide plate 12 using a bonding means 36. The adhesive and bonding means do not have to be same material and can be made of any material such as a pressure, thermal, or radiation curable adhesive as well as bonding by solvent welding. The radiation curable adhesive can include UV curable adhesives. Light sources 14, typically cold-cathode fluorescent lights (CCFLs) or light-emitting diodes (LEDs) or some other emissive source such as OLED, PLED and lasers, provide source illumination to light guide 12, which guides light using TIR. Light extracting film 20 also referred to as a second polymeric layer bearing features only partly embedded in the adhesive layer obtains this light at an optical input surface 22 and redirects this light toward an output surface 24 at suitable angles for various lighting and display applications. Light extracting film 20 also referred to as a second polymeric layer bearing features only partly embedded in the adhesive layer has a plurality of light extracting features 26 (also referred to as features) projecting from a film substrate 38 to form input surface 22 and optically coupled with light guide 12 to obtain and redirect the light from light guide 12. The bottom surface 18 of the light guide plate 12 (LGP) can be either smooth or prismatic. In other embodiments of this invention, the polymeric film is matched from a refractive index standpoint to the LGP and or adhesive that is applied to the LGP to hold the polymeric film. It these embodiments, the films are typically cast and not oriented other than from the extrusion process to form them. Therefore there is little or no birefringence so any optical aberrations are reduced allowing for improve optical performance. The cast films are not heat set and therefore may have a similar dimensional change to that of the LGP. In such embodiments, there may be less stress forces between the polymeric features and the adhesive layer in which they are embedded. In such embodiments there may be less propensity to delaminate.

To create the assembly of figure 1, a bonding means 36 is applied to the top of light guide 12. Polymeric film 130 is coated with a optical adhesive 140 either in an offline, separate coating process or inline procedure during the process of assembling the illumination apparatus 10. The light extracting features 26 are then optically coupled into an adhesive 140 by a contact method, such as direct lamination.

As would be appreciated by those skilled in the optical design arts, light extracting features 26, bonding layer 36, optical adhesive layer 140, the polymeric film 130 and light guide plate 12 are preferably formed from materials having indices of refraction *n* that are substantially identical. This improves the extraction of light from light guide 12 and substantially prevents light at the interface from being reflected back into light guide 12.

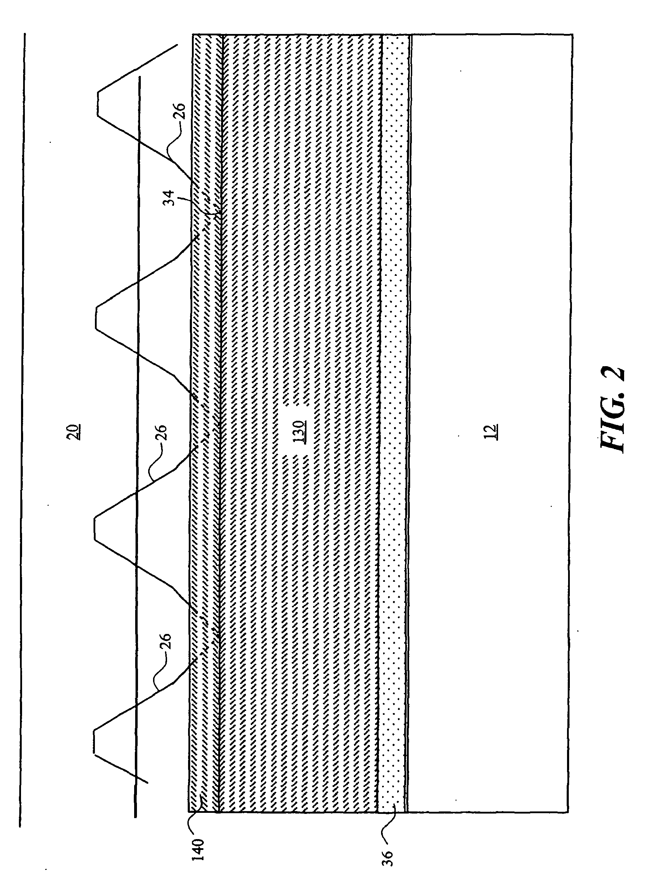

Referring to Fig. 2, this is a magnified view of the optical coupling obtained by using the light extracting film 20, an optical adhesive 140 and a polymeric film 130. The bonding layer 36 is applied or coated to the top of the light guide plate 12. The bottom of the polymeric 130 is optically coupled to the bonding layer 36. As shown in Fig. 2, apex 34 may lie directly against the surface of the polymeric film 130, registered against light guide 12 in this way, with the adhesive layer 140 used to hold light extracting features 26 in place and to provide a suitably sized input aperture for light extracting features 26. In a preferred embodiment, light extracting features 26 are embedded within the adhesive layer 140 to a depth of about 7-12 micrometers. The actual distance may vary slightly based on the relative size of the light extracting

The polymeric film 130, the bonding layer 36 and optical adhesive layer 140 have indices of refraction closely matched to the index of refraction n of light guide 12 and light extracting features 26. The polyester layer 130 could be any of various types of transparent materials, including, but not limited to polycarbonate, polyethylene terephthalate (PET), polyethylene naphthalate (PEN), or polymethyl methacrylate (PMMA). The preferred embodiment would be for all the n to match the light extracting features 26. In a specific embodiment, light extracting film 20 may be formed from any of various types of transparent materials, including, but not limited to polycarbonate, polyethylene terephthalate (PET), polyethylene naphthalate (PEN), or polymethyl methacrylate (PMMA) and an acrylic film; . Use of the layer of second optical adhesive 140 is advantageous for optical coupling, helping to compensate for dimensional tolerance errors in fabrication of light extracting features 26 and providing some allowance for varying the surface area for incident light obtained from polymeric film 130.

Optical adhesives have been used with earlier light redirection articles, such as that described in the '675 Onishi et al. patent, for example. However, as pointed out in the '675 Onishi et al. disclosure, the conventional approach teaches that embedment of light extracting extracting structures in an optical adhesive is to be avoided where possible. In conventional practice, the optical adhesive is employed as a bonding agent only, without actively employing the adhesive material to create an optical interface. Thus, for example, a type of surface lamination has been used to bond various types of microstructures to a light guiding plate, without embedment of the structures in the adhesive layer. The present invention, on the other hand, uses a controllable amount of embedment within the optical adhesive layer as a mechanism for achieving a needed level of optical coupling. The preferred embodiment of achieving the needed level of embedment is having the second optical adhesive 140 have a uniform thickness and then using the polymeric film 130 as a hard stop for the light extracting features 26. This also helps to increase the contact area between adhesive and microstructures, resulting in an improved bond to light guide 12.

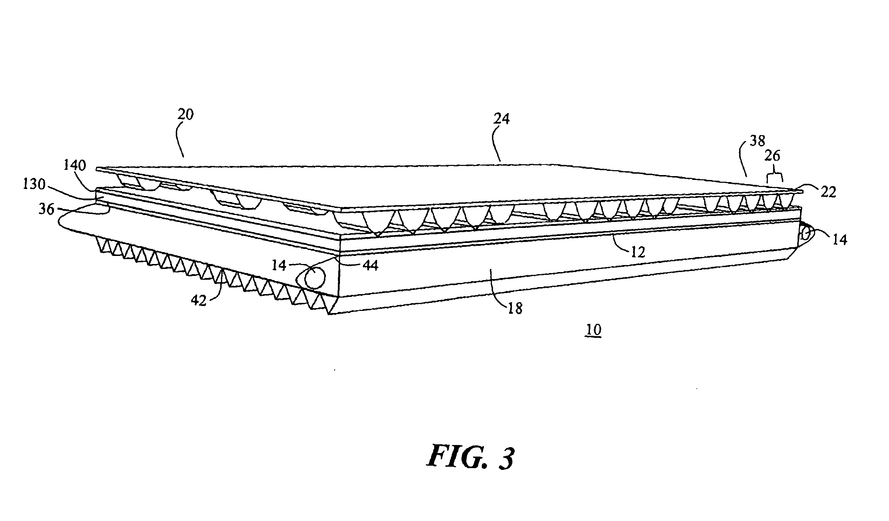

Fig. 3 shows perspective views from various angles of light extracting film 20 used as part of illumination apparatus 10. Fig. 3 shows an embodiment having two light sources 14. In order to control beam divergence in the direction normal to the plane of output surface 24, a bottom micro-structured layer 42 may be used. In a specific embodiment described herein, the bottom micro-structured layer 42 includes a plurality of prism-shaped elements that reduce beam angle by total internal reflection (TIR) in a direction normal to the plane of output surface 24 and thus more efficiently enhance brightness within a predetermined viewing angle. The bottom micro-structured layer 42 may form the bottom surface 18 of the light guide 12 as shown in Fig. 3. Depending on the viewing angle requirement, the apex angle of the prismatic structure on bottom micro-structured layer 42 is in the range of approximately 20.0 degrees to approximately 170 degrees. Illustratively, the pitch of the prismatic structure is in the range of approximately 10.0 micrometers to approximately 1.0 millimeter. In specific embodiments, the pitch is in the range of approximately 25.0 micrometers to approximately 200 micrometers.

Notably, bottom micro-structured layer 42 may include features that are other than prism-shaped. For example, the micro-structured layer may have features that are acute, semi-circular, conic, aspherical, trapezoidal, or composite of at least two shapes in cross-section. The pitch of each shape is in the range of approximately 10.0 micrometers to approximately 1.0 millimeter; and in specific embodiments the pitch is in the range of approximately 25.0 micrometers to approximately 200.0 micrometers.

In general, the features of micro-structured layer 42 are elongated in shape in a direction perpendicular to light accepting surface 44 on light guide 12. The size and shape of features can be varied along this direction, and in one embodiment at least one of the microstructures has a finite length that is less than the length of the light guide along the longitudinal direction. For example, the apex angle of a prismatic shape may be approximately 90.0 degrees near light accepting surface 44 and approximately 140.0 degrees farther away from the light source (i.e. toward the central portion of light guide 12). The features of the micro-structured layer 42 can be continuous or discrete, and they can be randomly disposed, staggered, or overlapped with each other. Finally, a bottom reflector that is planar or has a patterned relief may be disposed beneath light guide 12 or micro-structured layer 42 in order to further enhance brightness by reflecting back to the display light that has been reflected or recycled from display or backlight structures.

As detailed herein, light extracting features 26 of light extracting film 20 are disposed to provide an increased luminance to display and lighting surfaces. Moreover, the light provided to the display and lighting surfaces is more uniformly distributed over the surfaces. The combined effect is an increased luminance and a greater uniformity of light in display and lighting application. The bonding layer 36, the polymeric film 130, and the second optical adhesive 140 are shown in place to illustrate the optical coupling that takes place between the light extracting features 26 and the light guide 12.

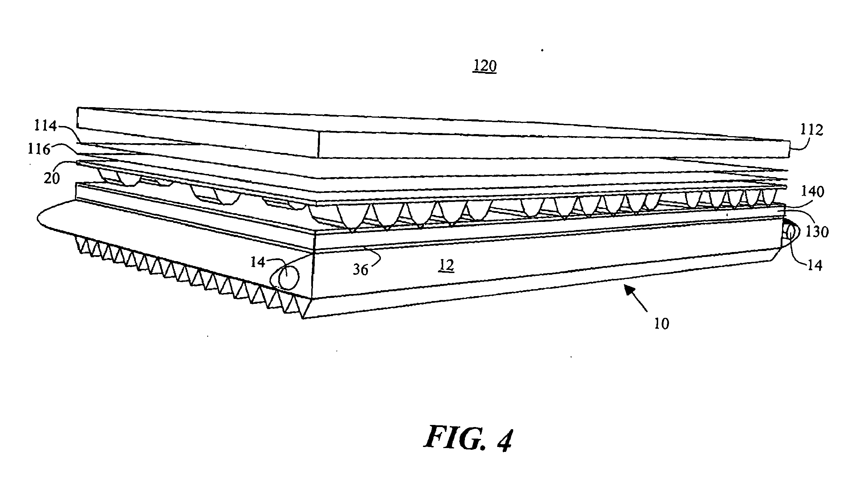

The perspective view of Fig. 4 shows a display apparatus 120 that employs light extracting film 20 in one embodiment. Illumination apparatus 10 has light guide 12 optically coupled with one or more light sources 14. Light extracting film 20, formed according to the present invention, is optically coupled to light guide 12 by using a bonding layer 36, a polymeric film 130, a second optical adhesive 140 and the light extracting features 26 which are embedded into the second optical adhesive 140. Other components may be provided for further conditioning of light from light extracting film 20, such as a diffuser 114 and reflective polarizer 116, for example. Reflective polarizer 116 transmits a portion of the redirected light having a polarization state parallel to its transmission axis. A light gating device 112 modulates incident light from light extracting film 20 and any other intervening light conditioning components in order to form an image. Light gating device 112 may be any of a number of types of spatial light modulator, such as a liquid crystal (LC) spatial light modulator for example.

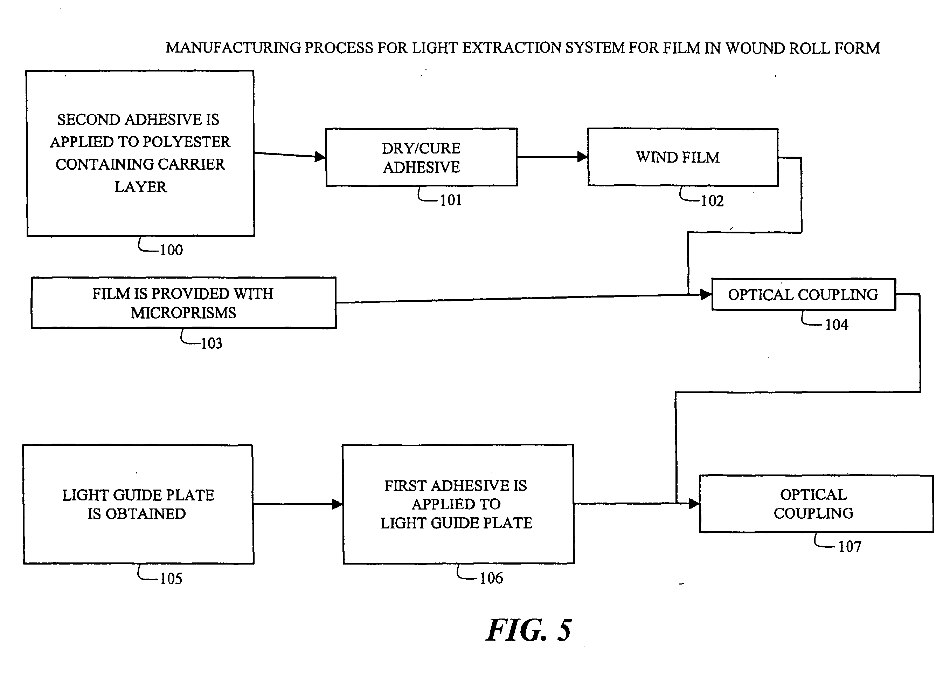

Fig. 5 shows the flow diagram for a manufacturing process of a light extraction film where the second adhesive is applied to a polymeric film web and maintained in a wound roll form. This arrangement is advantageous in manufacturing since the processes to create a light extraction system can be accomplished in separate, discrete steps. Step 100 shows a second adhesive is applied to the top of the polyester containing polymeric film. The application can be accomplished in a variety of methods, including coating or applying. In the preferred embodiment, the second adhesive is applied through slot coating. In step 101, the polymeric film is passed through a dryer or a cure unit and the second adhesive is dried or cured in place. This step can have a fully cured or partially cured reaction within seconds of exposure In step 102, the dried/cured film is wound into a roll form and set aside. Step 103 is providing the light directing film with microprisms, previously shown as light extracting film 20. This film can be either in roll or sheet format. Step 104 is the process of optically coupling the products from steps three and four together. This can be accomplished by multiple methods. In one method, the light extracting film is placed such that the light directing features are the proper relationship to the second adhesive and then both films are passed through a nip laminator, using a combination of temperature and pressure process conditions. Another method of optically coupling the products of steps 102 and 103 together is to apply a sufficiently high temperature to soften the adhesive material and then knifing or pressing it to the backside of step 103. The preferred method for step 104 is to use a nip laminator to have a uniform optical coupling across the entire sheet. Step 105 is utilizing a light guide for the light extraction film system. Step 106 is applying the bonding layer to the top of the light guide plate. The bonding means may be an adhesive that can be any type of curable adhesive such as thermal, pressure, or radiation curable. The application can be accomplished in a variety of methods, including any type of coating or application applying. Optionally, a release liner can be provided with the adhesive and can be subsequently peeled off. In step 107 the system is optically coupled with the products of steps 104 and 106 to produce the illumination assembly. In the preferred embodiment is a pressure-sensitive adhesive is applied to the top of the light guide in step 106, and the products of steps 104 and 106 are then put through a nip laminator at varying temperatures, nip pressures, gap heights, and speeds to achieve the desired results. This method allows a manufacturer to evaluate the individual components separately and minimize waste on the final product by rejecting parts that do not meet individual specifications.

In embodiment for forming an illumination apparatus useful in this invention, the process comprising
(a) applying a bonding layer to a lightguide for accepting light from at least one light source;
(b) coating an adhesive onto a first polymeric film;
(c) providing a light extracting second polymeric film having an input surface that comprises a plurality of light extracting features separated by regions of lower refractive index;
(d) forming an embedded light extraction film by embedding at least a portion of the light extraction features of (c) into the adhesive of (b); and
(e) affixing the bonding layer of (a) to the non-adhesive side of the first polymeric film...

Such a process is useful because it allows the light extraction film to be embedded to the correct depth into the second adhesive layer. Typically the embedment of the light extractors needs to be very uniform across the width and in the length dimension of the illumination apparatus. The uniformity of depth helps to assure that the illumination uniformity is substantially uniform in any region of the illumination apparatus. The extractor features may be of any design, shape or density that provides uniform illumination whether it is near a light source or at a point that is a long distance from the entering light. The light extraction features may be prismatic forming channels, they may be individual elements, the density of the features, their size and shape may also be varied as a function from the distance from the entering light source. By forming areas with different degrees of optical coupling, a means is provided to uniformized the light as it is turned and redirected. The structures may have one or more facets or the feature may be flat on the apex end. Embedding the extraction feature part way into an adhesive provides an opportunity to trap air or other gas between features thereby forming regions of high and low refractive index. Such regions of high and low refractive index can be used to turn or otherwise direct light in the desired direction for use in a display. The shape of the low and or high refractive index also helps to control the light management.

The process as well as the illumination apparatus useful in the embodiments of this invention for the bonding layer and an adhesive comprise at least one selected from the group consisting of thermally activated, pressure activated, chemically activated or UV light cured materials. Some pressure sensitive adhesives (PSA) are useful embodiments in this invention because they can have excellent optical and adhesive properties that are useful in display application. Typically embodiments of pressure sensitive adhesive will have an optical transparency of greater than 85% and more preferable greater than 90%. Pressure sensitive adhesive are easy to apply and may be coated out of water or organic solvents. They also can be made with varying amounts of bond force between various surfaces. They typically are easy to wet out during application to a surface during coating or lamination. This helps to minimize air bubbles and other problems. PSA tend to flow with the application of heat and may not be the best material for use in a wide range of environmental conditions. Handling can present some additional issues because they are tacky at room temperature and dirt particles can be stuck to the surface. It should be noted that the PSA and other adhesive types may be made to be electrically conductive so as to manage static and possible dirt attraction. Other materials such as thermally activated adhesive (TSA) are useful embodiments in this invention because they can be formulated to provide excellent bonding force to a variety of surfaces. They require the addition of heat to activate their adhesive properties and therefore are easier to handle and clean prior to adhering to a surface. TSA's when applied to a surface may have little or no tack but when exposed to an elevated temperature their adhesive properties are activated and when cooled to room temperature provide a strong adhesive bond between surfaces. TSA's can be formulated to provided better environmental performance at higher temperatures than most PSA's. The heat may be applied by thermal transfer as in a roller laminator or any radiant means. The adhesive properties may be modified with addenda to make it more sensitive to heating vs. other layer such as the polymeric film or light guide. Other adhesives useful in the embodiments of this invention include chemically activated adhesives such as epoxies and light curable adhesives such as UV curable. Whether chemically or light activated, cured adhesives are useful because they from very strong bonds to a variety of materials and the bond is very resistant to environmental changes such as temperatures, humidity and chemical exposure. Typically these adhesive undergo a chemical crosslinking so as to modify the cured adhesive properties. The various classes or type of adhesives have a variety of physical properties during their preparation , application. And curing. Control of these properties is important to assure that the adhesive is coated or transferred in a uniformity manner that assures uniform thickness control and is free of coating or laminating imperfections. When partly embedding a light extraction feature into an adhesive layer it is desirable to control the thickness of the adhesive layer to within microns. The control of the solution or dispersion rheology and viscosity is necessary when applying a thin adhesive to a substrate. When embedding a light extraction feature, it may be necessary to coat the adhesive to a thickness of a few microns and when the feature is embedded the substrate comprising the thin adhesive layer acts as a physical stop to prevent the feature from being pushed into the layer too far. The amount of heat and pressure is important during this process because the adhesive is being displaced by the relative volume of the light extraction feature and the adhesive will tend to wet-out or adhere to the side wall of the feature at a distance greater than the average thickness of the adhesive layer prior to the embedding process. Control of the embedment process (lamination) may include the addition of heat to one or both sides of the webs being laminated. The adhesive may be pre-heated prior to lamination step. Depending of the thickness of the substrate (ie. several mm thick light guide) comprising the adhesive layer, it may be beneficial to apply heat to the light extraction film so as to act like a hot knife in butter. Another means to control the amount of wet-out on the sidewall of the light extraction feature is to use a fluid-like monomer, oligimer or chemically crosslinked adhesive such as an epoxy that is applied as the second adhesive and an external force such as light exposure to certain wavelengths and or heat is applied to initiate a reaction so as to cross-link or otherwise activate the material to form a bond between the extraction feature and the second adhesive as well as between the second adhesive and the polymeric film.

In the process described above the first adhesive has a bonding force between said light guide and said polymeric film of at least 200 newtons/m. In this process two flat surfaces are being bonded together and typically will have excellent bonding force between the lightguide and the adhesive and between the adhesive and the first polymeric film. In some embodiments that lightguide plate and the polymeric film may be the same materials such as polycarbonate or PMMA or in other embodiments the lightguide plate may be PMMA or Polycarbonate while the polymeric film may be either a cast or heat stabilized polymer. Useful polymeric films of the first polymeric film may include but are not limited to polyesters, PEN, acetate, polyimide, polyolefins, polysulfones, cyclolefin, polycarbonates, PMMA and copolymers thereof. Such materials may be pretreated by coronea discharge in air or within controlled a gas atmosphere so as to functionalize the surface and or chemically primed to improve adhesion, and wetting. The surfaces and or the adhesive may also be made conductive so as to better manage the buildup of static. It may also be desirable to provide a hardcoat on one or more side of the lightguide plate to prevent scratching. The process as described above and the resulting embodiments useful in this invention provides a bonding force between the light guide and the polymeric film of at least 200 newtons/m. Higher bonding forces are useful because as different materials expand and contract under a wide variety of environmental temperature and humidity condition, stress are applied at the various interfaces between the light guide, the second adhesive and the polymeric film. The adhesive boding force needs to withstand temperature ranges from -40 to 90C as well as humidity changes from 0 -100% at various temperatures. These conditions may be for prolong exposures times and under somewhat rapid cycling conditions of temperature and humidity.

In the embodiment of this process in which the light extraction features are partly embedded into the second adhesive layer the average adhesive force between said adhesive and said light extraction features should be at least 100 newtons/m. It should be noted that certain light extraction films may have a different surface area for embedment (optically coupling). Sense the surface area for adhesion is different within different regions of the light extraction film, the adhesion or bonding force may vary. Sense there are regions of features that are embedded in the adhesive and regions in between features that comprise air (no extractor feature) there are regions of the extraction that have no adhesion. In some embodiments useful in this invention the extractor features of the light extraction film are embedded at least one micron in the second adhesive. In other embodiments useful in this invention the extractor features of the light extraction film are embedded to a depth of 1 to 15 microns. In all these embodiments the depth of embedment is largely dependent on the relative size of the extraction feature and in all case the depth uniformity of embedment for the illumination apparatus is within 1-4 microns across the apparatus viewing area. In a preferred embodiment the light extraction feature of the light extraction film is embedded in the second adhesive to a depth of between 15 to 30 % of the extraction feature height. The illumination apparatus useful in this invention should provide an illumination uniformity (point to point delta) of less than 10% of the average illumination of the display

The embodiments of this invention need to have air or a gas between the light extraction features. In the process embodiment above, the light extracting film has an input surface that comprises a plurality of light extracting features separated by regions of lower refractive index providing a refractive index difference between said light extraction features and said separated regions of between 0.8 and 0.05. Such an embodiment provides for optimum extraction of light from the illumination apparatus. In should be noted that the light guides useful in this invention have two major surfaces. One that faces the viewing side of the illumination apparatus or display and a side opposite of the viewing side. The light extraction features are adhered on the viewing side of the light guide. On the side opposite of the viewing side of the light guide, there may be a means of extracting towards the view side. Such a means may include a prismatic structure, a roughen surface, a series of printed reflective surface features such as dots or other shapes so as to aid in the luminance uniformity of the illumination apparatus.

Useful adhesives for the first and or second adhesive may include a wide variety of adhesive. The adhesive layer may comprise at least one material selected from the group consisting of olefins, polyesters, silicones, rubbers, styrene, styrene butadiene as well as styrene blocked copolymers and polyisobutylene, urethanes, vinyl acetates, polyvinyl ethyl ether, acrylates, methacrylates, acrylamides, acrylonitrile and copolymer thereof including butyl, ethyl hexyl, methyl methacrylate, styrene, ethyl acrylate. Adhesive that are light sensitive start out as a monomer or oligimer and are then crosslinked or otherwise chemically reacted to form a cured adhesive. Monomers that influence the adhesive properties include acrylic acid, methacrylic acid, acylic amide, hydroxethyle acrylate, hydropropyl acrylate, butanediol momoacrylate,vinyl pyrrolidone, vinyl imidazole.

Photoinitiators may include but are not limited to benzoin ethers, benzyl dialkyl, benzophenone, acetophenone derivatives and copolymer thereof. Crosslinking or curing is often employed in the manufacture of adhesives to increase the shear adhesion, cohesive strength and resistance to elevated temperature and environmental conditions.

Tackifiers and tackifiying agents such as hydrocarbon resin containing aromatic, aliphatic and diene (cyclic idolefin) monomers. Sulfur or sulfur donors, phenolformaldehyde resins, peroxides and isocyanates may be employed in some adhesive systems to aid in crosslinking or curing of the adhesive.

In those embodiments where the first adhesive and or the second adhesive comprises a cross-linkable adhesive such an adhesive may further comprise at least one photoinitiated. Such photoinitiators may be sensitive to UV exposure. The UV exposure may be a specific wavelength or a distribution of UV wavelengths from 200-390nm. Such materials are useful because the adhesive may start as a pressure sensitive adhesive that can provide some bonding force between the light extraction film and the light guide or other polymeric film. Providing an initial bond force may be useful during the handling or conveyance of thee polymeric films and or light guide. The adhesive can be crosslinked at some point to provide a more durable bond that is capable of providing improved environment performance. Such adhesives may start as pressure sensitive or they may partly cured with one wavelength of exposure and then fully cured (corsslinked) with a second exposure to a different wavelength of light. Such adhesives may be referred to as a dual cure adhesive. Other adhesive types useful in this embodiment may comprise a chemically crosslinked materials such as an epoxy. Epoxies are useful as adhesives because they form very strong and durable bonds between a wide variety of materials and the bonds are resistant to a wide range of temperature and environmental conditions.

In a preferred embodiment of this invention a display comprises an illumination apparatus comprising at least one light source, a light guide plate, a first layer of adhesive, a first polymeric film, a second layer of adhesive, a light extraction film with features partially embedded in the second adhesive forming regions of polymeric feature and air, Such a display is useful because light can be provide on the side of the light guide plate and extracted towards the viewing side of the display. The process described above is one means of providing such a display. Additionally the display of may further comprises at least one function selected from the group consisting of light diffusion, light collimating, light recycling, polarization, light modulating and color filtering.
In the embodiments useful in this invention the light guide may comprise two major surface, one bottom surface with features to aid in directing light towards the light extraction surface and one top surface facing the view side of the display in which the top surface further aids in the extraction of light from the light guide.

The illumination apparatus of this and other embodiments comprises a light source of at least one selected from the group consisting of LED, CCFL, laser and OLED (organic light emitting diode), PLED (polymer light emitting diode).

Uniformity of light extraction is desirable to provide the most appealing viewing of a display and it display content. The illumination apparatus of this invention has an illumination uniformity of (point to point delta) less than 10% of the average illumination of the apparatus.

Useful adhesives for the first and or second adhesive may include a wide variety of adhesive. The adhesive layer may comprise at least one material selected from the group consisting of olefins, polyesters, silicones, rubbers, styrene, styrene butadiene as well as styrene blocked copolymers and polyisobutylene, urethanes, vinyl acetates, polyvinyl ethyl ether, acrylates, methacrylates, acrylamides, acrylonitrile and copolymer thereof including butyl, ethyl hexyl, methyl methacrylate, styrene, ethyl acrylate.

Adhesive that are light sensitive start out as a monomer or oligimer and are then crosslinked or otherwise chemically reacted to form a cured adhesive. Monomers that influence the adhesive properties include acrylic acid, methacrylic acid, acylic amide, hydroxethyle acrylate, hydropropyl acrylate, butanediol momoacrylate,vinyl pyrrolidone, vinyl imidazole.

Photoinitiators may include but are not limited to benzoin ethers, benzyl dialkyl, benzophenone, acetophenone derivatives and copolymer thereof.

Crosslinking or curing is often employed in the manufacture of adhesives to increase the shear adhesion, cohesive strength and resistance to elevated temperature and environmental conditions.

Tackifiers and tackifiying agents such as hydrocarbon resin containing aromatic, aliphatic and diene (cyclic idolefin) monomers. Sulfur or sulfur donors, phenolformaldehyde resins, peroxides and isocyanates may be employed in some adhesive systems to aid in crosslinking or curing of the adhesive.

In a preferred embodiment of this invention a process for forming an illumination apparatus comprises applying an adhesive to the top surface of the light guide and partially embedding light extraction features of a light extraction film into the adhesive. Typically the adhesive in a dried state is between 5 and 50 microns in thickness and preferable between 6 to 20 microns. It should be noted that a solvent (includes water) may be used to dilute the adhesive during when applied to the light guide. This provides a means of obtaining a thin uniform layer of adhesive when the solvent is driven off. In a preferred embodiment that adhesive thickness prior to embedding the light extraction features is at least 60% of the desired embedment depth of the light extraction feature. The illumination apparatus formed by this process is part of a display. The display may further comprise at least one function selected from the group consisting of light diffusion, light collimating, light recycling, polarization, light modulating, color filtering.

The displays of this invention further comprise an illumination apparatus comprising at least one light source, a light guide plate, an adhesive layer, a light extraction film with features partially embedded in the second adhesive forming regions of polymeric feature and air. The displays of this invention are an LCD.
The illumination apparatus of this and other embodiments comprises a light source of at least one selected from the group consisting of LED, CCFL, laser and OLED (organic light emitting diode), PLED (polymer light emitting diode). Uniformity of light extraction is desirable to provide the most appealing viewing of a display and it display content. The illumination apparatus of this invention has an illumination uniformity of (point to point delta) less than 10% of the average illumination of the apparatus. Similar adhesive classes as described above may be used for direct application to the light guide. The adhesive is applied in a fluid or liquid form and if any solvent are present, the solvent needs to be removed prior to bring the light extraction film into contact with the adhesive otherwise solvent would be trapped between two surfaces and problems would be encountered. It should be noted that only some solvents may be used. Solvents that do not react to the light guide or the light extraction film or features are desirable. Otherwise these surfaces need to be treated so as to render them resistant to the solvent in the adhesive when it is applied . The preferred adhesive for this embodiment are the UV curable.

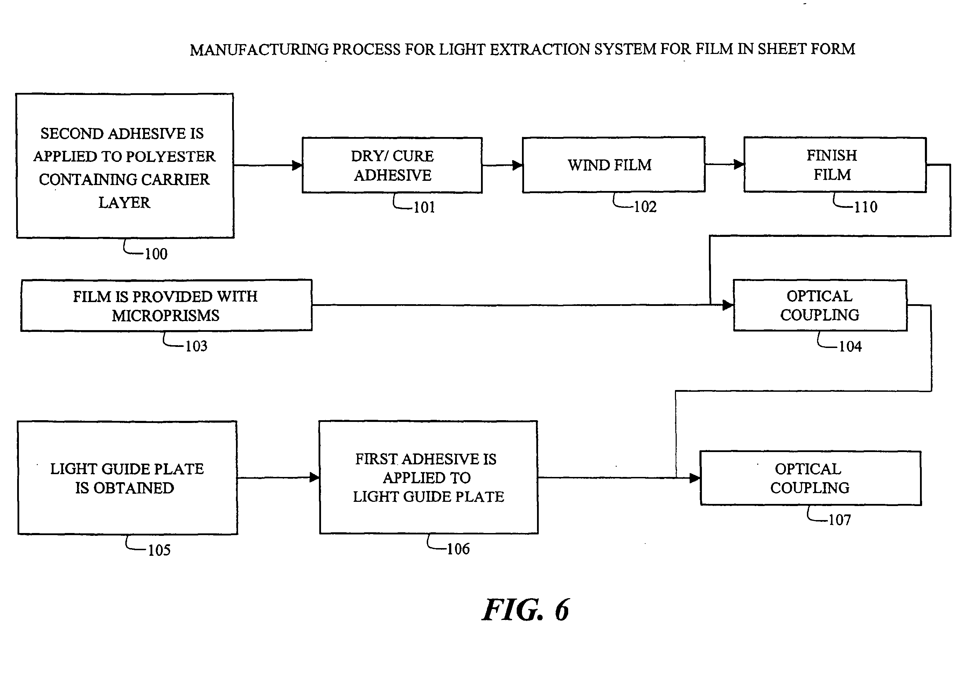

Fig. 6 shows the flow diagram for a manufacturing process for a light extraction system for film in a sheet roll form. This arrangement is advantageous in manufacturing since the processes to create a light extraction system can be accomplished in separate, discrete steps that allow the manufacturer to custom size the final format without having to make major modifications on existing facilities. Step 100 shows a second adhesive is applied to the top of the polymeric film. The application can be accomplished in a variety of methods, including coating or applying. In the preferred embodiment, the second adhesive is applied through slot coating. In step 101, the polymeric film is passed through a dryer or a cure unit and the second adhesive is dried or cured in place. This step can have a fully cured or partially cured reaction within seconds of exposure In step 102, the dried/cured film is wound into a roll form and set aside. In step 110, the product of step 102 is finished into a specific size for the following steps. This allows a manufacturer to meet customer specifications that may change over time or discard waste areas of film prior to making the final product. Step 103 is providing the light directing film with microprisms, previously shown as light extracting film 20. Step 104 is the process of optically coupling the products from steps three and four together. This can be accomplished by multiple methods. In one method, the light extracting film is placed such that the light directing features are the proper relationship to the second adhesive and then both films are passed through a nip laminator, using a combination of temperature and pressure process conditions. Another method of optically coupling the products of steps 102 and 103 together is to apply a sufficiently high temperature to soften the adhesive material and then knifing or pressing it to the backside of step 103. The preferred method for step 104 is to use a nip laminator to have a uniform optical coupling the discrete sheets across the entire sheet. Step 105 is utilizing a light guide for the light extraction film system. Step 106 is applying the first adhesive to the top of the light guide plate. The first adhesive can be any type of curable adhesive such as thermal, pressure, or radiation curable. The application can be accomplished in a variety of methods, including any type of coating or application applying. Optionally, a release liner can be provided with the adhesive and can be subsequently peeled off. Optionally, a release liner can be provided with the adhesive and can be subsequently peeled off. In step 107 the system is optically coupled with the products of steps 104 and 106 to produce the illumination assembly. In the preferred embodiment is a pressure-sensitive adhesive is applied to the top of the light guide in step 106, and the products of steps 104 and 106 are then put through a nip laminator at varying temperatures, nip pressures, gap heights, and speeds to achieve the desired results. This method allows a manufacturer to evaluate the individual components separately and minimize waste on the final product by rejecting parts that do not meet individual specifications. For this invention, the preferred embodiment is through applying a pressure-sensitive adhesive to the top of the light guide and placing steps five and seven through a nip laminator and varying the temperature, nip pressure, gap, and speed to achieve the desired results.

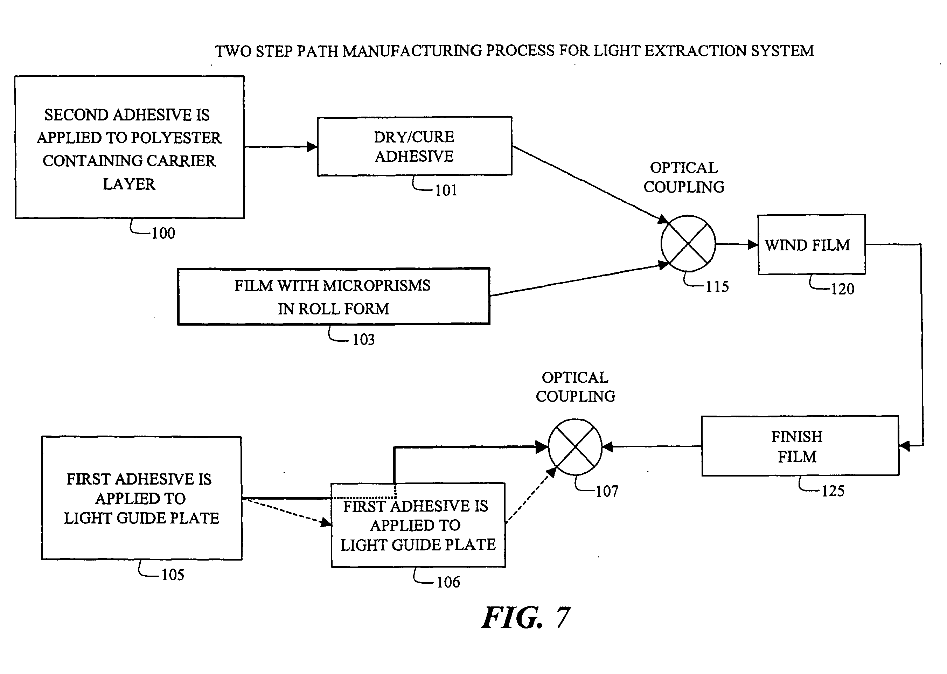

Fig. 7 shows the flow diagram for a manufacturing process for a light extraction assembly in a two path manufacturing process. This arrangement is advantageous to manufacturing because it is primarily a single-pass operation, which minimizes product cost by taking out an entire manufacturing step. In this embodiment of the invention the second adhesive is applied to the polymeric film, dried, and optically coupled to the mircrrostructured light extractingfilm one process step. Step 100 shows a second adhesive is applied to the top of the polymeric film. The application can be accomplished in a variety of methods, including coating or applying. In the preferred embodiment, the second adhesive is applied through slot coating. In step 101, the polymeric film is passed through a dryer or a cure unit and the second adhesive is dried or cured in place. This step can have a fully cured or partially cured reaction within seconds of exposure Step 103 is providing the light directing film with microprisms, previously shown as light extracting film 20. This film will be in wound roll format for the following step. Step 115 is the process of optically coupling the steps two and three together during the manufacturing process. The preferred method to accomplishing step 115 is using an in-line nip laminator that has thermal and pressure controls to optically couple the steps together. In step 121, the dried film containing steps 101 and 103 is wound in roll form and set aside. Step 125 is a finishing step, which allows the manufacturer to cut the film into a specific size for the following steps. This allows a manufacturer to meet customer specifications that may change over time. Step 105 is utilizing a light guide for the light extraction film system. Step 106 is applying the first adhesive to the top of the light guide plate. The first adhesive can be any type of curable adhesive such as thermal, pressure, or radiation curable. Step 105 could also have an optional step in which a light guide plate that already has the proper adhesive applied to it can be obtained. The adhesive can be cured by methods such as thermal, pressure, or UV light. In step 107 , the system is optically coupled with the products of steps 125 and 105/106 to produce the illumination assembly. In the preferred embodiment is a pressure-sensitive adhesive is previously applied to the top of the light guide in step 105, and the products of steps 105 and 125 are then put through a nip laminator at varying temperatures, nip pressures, gap heights, and speeds to achieve the desired results. This method allows a manufacturer to evaluate the individual components separately and minimize waste on the final product by rejecting parts that do not meet individual specifications.

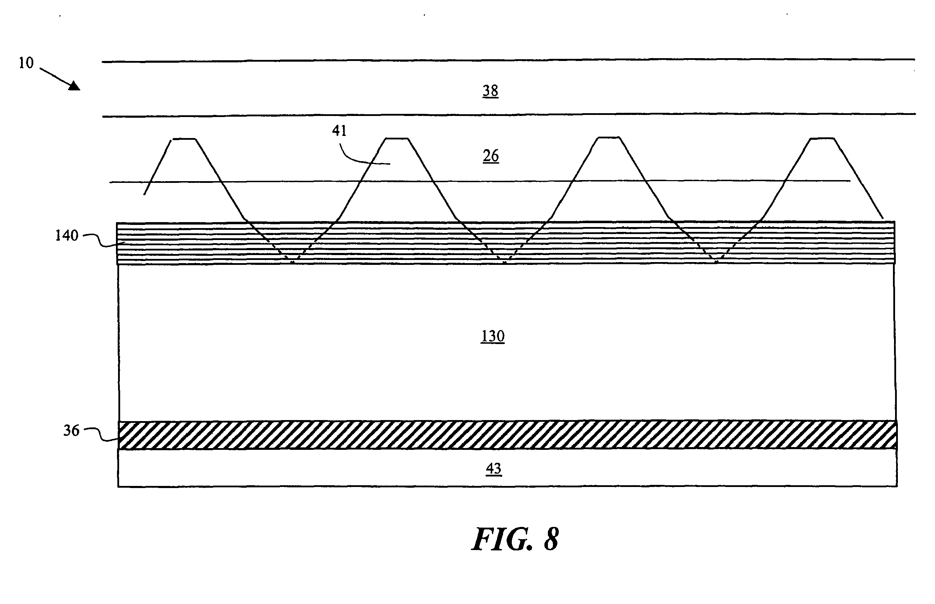

Fig. 8 is an illumination apparatus 10 comprising polymeric film 38 with surface features 26 with interstitial air gap 41. Features 26 are partly embedded in a layer of adhesive 140 which is positioned on polymeric film 130. In addition an enhanced version of the illumination apparatus may further comprise a bonding mean 36 and an optional release liner 141. Adhesive layer 140 has a thickness that typically is 6 to 16 microns in thickness. The adhesive layer needs to be optically transparent and preferable has a refractive index substantially equal to the polymeric layer 130 as well as to features 26. The apex or vertices of the prism is partly embedded in the adhesive layer. The embedding of the feature provides an optical coupling. The features as shown in this figure have a double facet and the first facet forming the tip of the feature is embedded to the position of the second facet. There may be a slight meniscus that forms during the process of forming the illumination apparatus. This is the result of the relative displacement of the adhesive during the lamination process. Control of the meniscus is related to the relative viscosity and modulus of the adhesive at the time of embedding the features in the adhesive layer. The addition of heat to either or both the adhesive layer and or the features aids in the embedding process and control of wetting of the sides of the features. To help ensure good uniformity of brightness across the illumination apparatus and display in which it may be used, it is desirable to control the embedment uniformity to within +/- 1-3 microns at any point in the viewing portion of the illumination apparatus. The relative size, density and shape of the features may vary from the edge to the center of the illumination apparatus. In some embodiments of the process of forming the illumination apparatus that has a variation in the density of features from the edge to the center, there are further problems that are encountered to control the depth of embedment and the amount of side wetting of the features. The displacement of the adhesive could vary because there may be a variation in the displacement volume and the resulting flow pattern caused by the displacement. In some embodiments it may be desirable to apply differential pressure from edge to center or a differential heating process that allows the adhesive to flow or otherwise yield in a manner to accommodate the differential volume and pattern density due to the difference in feature density. The relative roller hardness of the laminator can also impact the uniformity of the embedment. Sufficient force may be required to force the center of the feature on the polymeric film to the point of touching the polymeric film 130. In other process embodiments it may be desirable to hold the embedded features under pressure while the adhesive is cooled. This helps to prevent any rebounding or up lifting of the features from the surface of film layer 130. Other means of achieving uniform embedment may be the used of a crowned roller in the laminator in order to change the relative force from center to edge. Other means are to provide rollers with a differential hardness profile or to use a bladder style laminator that allows conformal pressure due to the flexibility of the bladder. Zonal areas of pressure application may also be used using a bladder that has regions that apply different levels of pressure. This can be achieved by having individual zone control of pressure application or by having regions of the bladder that respond to pressure application in a different way. Stiffer bladder materials will respond in a different manner that less stiff materials. The above methods are typical of a solid to semi-solid adhesive such as PSA and TSA. The application of heat and pressure will cause them to flow and they will substantially return to there original state after the heat is removed. If a liquid adhesive is applied as layer 140 the viscosity may be lower than with the of a solid adhesive allowing the liquid adhesive to flow after it has been displaced during the embedment process. Since the thickness of the adhesive layer is less than a micron it may be desirable to coat or otherwise dilute the adhesive when it is first applied. Any solvent including water would have to be dried off prior to laminating the film with the features into the adhesive layer. If a UV or other radiation curable or crosslinkable adhesive is used, the pre-drying may not be needed. The features would be embedded into a liquid state and held, as the adhesive is crosslinked. In the case of a UV curable the radiation may be applied through polymeric film 130 and or through film 38 and features 26. IN this case it is desirable to minimize any absorption of the wavelength of light by these polymeric layer or features. If films are used that absorb some of the curing wavelength, the amount or time of exposure may be needed to compensate for the loss. Addenda may be added to the adhesive that accelerate the rate of crosslinking.

Since the illumination apparatus may be applied to a lightguide plate, it is desirable to bond it to form an optical coupling. The bonding may be any means known in the art of adhering one material to another. For use in a display or other optical application the bonding layer should be optically clear ( greater than 85% transmission but more preferable greater than 90%. The bonding means may be a pressure sensitive, a thermal sensitive or UV curable or epoxy-based adhesive. The bonding means may also be achieved by a solvent welding means that partly dissolves the polymeric film layer and or the light guide plate. When solvent welding, care need to be taken to minimize any haze that may form in this region that bonds the two materials. As shown in the embodiment of figure 8, the bonding layer may be applied to the side opposite of the features. The application of this bonding means may be before or after the features are embedded on the opposite side. It should also be noted that an optional release liner (cover sheet) may temporally be applied over either or both adhesive layer 140 and bonding means 36. In the case of solvent welding, it lamination to the LGP or film with feature would have to occur substantially immediately and the use of a release liner would not be needed. The use of an optional release line would provide a means to coat the adhesive layer or bonding means to film layer 130 and then roll or sheet it up for future lamination of the features or application to a light guide plate. In such a case the optional release liner is removed prior to laminating other film or plates to it. It is also recognized to anyone skilled in the art that the release liner could also serve as a protection layer to prevent scratching or dirt being deposited on the adhesive layer. In another embodiment the backside of polymeric layer 38 could serve as a release liner.

In other embodiments of this invention the bonding means may be applied to the lightguide plate and then illumination apparatus can be adhered to bonding means 36. As discussed above an optional release liner could be applied to bonding means layer 36 after it has been applied to the lightguide plate.

A backlight useful in this invention comprising in order a lightguide plate with a sidelit light source and bonded thereto a light extraction unit containing, in order from the lightguide plate, a first polymeric layer, an adhesive layer, a second polymeric layer bearing features only partly embedded in the adhesive layer wherein the materials of the first polymeric layer, the adhesive layer, and the second polymeric layer differ by less than 0.05 in refractive index, the interstitial regions between the non-embedded portions of the features containing a material having a refractive index at least 0.1 lower than that of the material of the features. Such a backlight is useful because it provides uniform light from edge to center and it provides a means of forming a light extraction means that can be easily applied to a light guide plate. Having an optical film that can be formed into an illumination apparatus and then applied to a light guide plate provides for a process that is easy and relative cheap to make. By forming the features separate from the lightguide plate allows for a roll to roll manufacture process for both the light extraction features as well as the embedment of the features into an adhesive layer that optically couples part of the features that provides a means of light extraction by forming regions of polymer adjacent to region of air. As light moves through the polymer and encounters a low refractive index layer of air, the light path is changed and allows it to exit on the top or view side of the backlight. Since the features are formed by either a UV curable material of a hot molten polymer used in an extrusion roll molding process, the replication of the desired features provides improved replication precision and therefore improved optical performance. A bonding layer may be sued to adhere and optically couple the lightguide plate to the first polymeric layer of the illumination apparatus. The bonding layer may be an adhesive or it may be of fusing the lightguide plate to the illumination apparatus. The bonding layer should be optically clear and have sufficient adhesion to provide adhesion even during environmental testing of high temperature and high humidity. In the formation of the display and of the illumination apparatus there is an interstitial region between the non-embedded portion of the features. In a useful embodiment of this invention the interstitial region is air or other gas that has a lower refractive index than the polymer feature. The larger the refractive index difference between the features and the interstitial region between the features the more efficient the display is in extracting light towards the viewer. Most polymers may have a refractive index between 1.49 and 1.6 and air is 1.0.

In a preferred embodiment of this invention a display comprising a backlight comprising in order a lightguide plate with a sidelit light source and bonded thereto a light extraction unit containing, in order from the lightguide plate, a first polymeric layer, an adhesive layer, a second polymeric layer bearing features only partly embedded in the adhesive layer wherein the materials of the first polymeric layer, the adhesive layer, and the second polymeric layer differ by less than 0.05 in refractive index, the interstitial regions between the non-embedded portions of the features containing a material having a refractive index at least 0.1 lower than that of the material of the features.

Such a display may further comprises at least one function selected from the grouping consisting of light diffusion, light collimation, light enhancement, light recycling, light polarization, light modulation and a light source. The addition of other functional layer provides further means to shape and control the light to maximize its on-axis brightness and or to direct so of the light slightly off axis in order to enhance the viewing of the display from other vantage points. The light source used in the display of this invention are typically provided from the side of the backlight and are a solid state lighting source. Such lighting source may comprise but are not limited to LED, OLED, PLED, and or laser.

The bonding layer and or said adhesive layer that are used to form the backlight useful in this invention may have at least one material selected from the group consisting of acrylate, polyester, styrene, urethanes, acrylate monomers, oligimers and copolymer thereof or epoxies. It may also be possible to bond some of these layers by a means of solvent welding. This means of bonding dissolves a portion of the lightguide plate and or polymeric film layer and as the solvent is absorbed back into the polymer structure and uses the two surfaces together. It is desirable to use a minimum of solvent so as to reduce the relative haze level. When embedding the features of the second polymeric film bearing features, it is desirable to embed them in the adhesive layer at least between 7 to 30 % of the extraction feature height. The features form a apex at the end being embedded. The features useful in this invention may vary in their shape, size and or packing density as a function of the distance from the light source. Typically because the light is stronger as it first enters the lightguide, the extraction feature are less than in the center or end.

A light extraction unit comprising, bonded in order, a first polymeric layer, an adhesive layer, a second polymeric layer bearing light extracting features only partly embedded in the adhesive layer wherein the materials of the first polymeric layer, the adhesive layer, and the second polymeric layer differ by less than 0.05 in refractive index, the interstitial regions between the non-embedded portions of the features containing a material having a refractive index at least 0.1 lower than that of the material of the features is useful in that it allows two film to be joined together whereby there are regions of polymer and interstitial air formed in the non-embedded regions. Since the formation of the embedment of features partly into an adhesive layer that is less than one mil in thickness requires a uniformity of that embedment of between 1-3 microns, it is desirable to perform a composite film prior to joining it to the lightguide plate. This provides a means of either a roll to roll or roll to sheet manufacturing process that requires very precise lamination control to obtain the desired tolerance required for the formation of the light extraction unit. In order for the light extraction unit to perform properly the interstitial regions between non-embedded features comprises air. The high delta refractive index form by this region and the adjoining polymeric features allow for the light to be extracted in a very efficient means. The features are embedded between 7 and 30 % of their height to maximize the amount of light extraction.

The adhesive layer useful in this invention may comprise at least one material selected from the group consisting of acrylate, polyester, styrene, urethanes, acrylate monomers, oligmers and copolymer thereof or epoxies. The adhesive layer should be optically clear. The higher the level of transmission the better. It is also beneficial to substantially match the refractive index of the adhesive to that of the polymeric film and to the materials used to form the features. The light extraction unit features may vary in their size, shape and packing density as a function of their distance from a light source. Such variation is useful in providing uniform extraction of light from the light entry point to the middle or end of the lightguide.

Another embodiment useful in this invention provides a process for forming an light extraction unit comprising applying an adhesive to a first polymeric layer; providing a second polymeric layer bearing features having an input surface that comprises a plurality of light extracting features separated by regions of lower refractive index, forming an embedded light extraction unit by partly embedding at least a portion of the light extracting features into the said adhesive and then bonding the light extraction unit to the output side of the light guide plate. By performing the light extraction unit prior to bonding it to the lightguide plate, manufacturing improvements are made because the light extraction unit may be tested before it is bonded to the expense lightguide plate.

The process for forming an illumination apparatus comprising applying a first adhesive to a first side of a first polymeric layer, providing a second polymeric layer bearing features having an input surface that comprises a plurality of light extracting features separated by regions of lower refractive index, forming an embedded light extraction unit by partly embedding at least a portion of the said light extracting features into the first adhesive, applying a bonding layer to the second side of the first polymeric layer, bonding the said light extraction unit to the output side of a light guide plate. This process allows for the application of two adhesive or bonding layer to a polymeric film and embedding a featured polymeric film to one side and then using the other adhesive or bonding layer to joint it to a lightguide plate. While a specific order is listed above, a light extraction unit may be formed by first coating or applying a bonding layer to the side that will be joined to the lightguide plate and then applying a release liner over the bonding layer and then applying an adhesive with controlled thickness on the opposite side. The polymeric film bearing the features is then laminated to the adhesive layer. In another embodiment of this invention an optional release liner may be applied to the adhesive and then removing the release liner prior to bonding the first polymeric film to the second polymeric film bearing features and applying an optional release liner to the bonding layer and then removing said release liner prior to bonding said light extraction unit to said light guide plate.

In another embodiment a process for forming an illumination apparatus comprises applying an adhesive to a first side of a first polymeric layer; providing a second polymeric layer bearing features having an input surface that comprises a plurality of light extracting features separated by regions of lower refractive index: forming an embedded light extraction unit by partly embedding at least a portion of the said light extracting features into the first adhesive; applying a bonding layer to the output side of said light guide plate; bonding the said light extraction unit to the second side of the first polymeric layer. In a further embodiment the above process further comprises applying and optional release liner to the first adhesive and then removing the release liner prior to bonding the first polymeric film to the second polymeric film bearing features and applying an optional release liner to the output side of said light guide plate and then removing said release liner prior to bonding said light extraction unit to said light guide plate.

In the processes of this invention the lamination step provides at least one function selected from the group pressure, heat, and curing. Heat is useful in lower the relative viscosity of the adhesive and further helps in allowing the adhesive layer to wet the polymeric film or the features. Good surface wetting is useful in getting good uniform adhesion that is free of bubbles and other defects that may otherwise occur during a lamination process. Adequate pressure needs to be applied to push the features to the point of touching the substrate bearing the adhesive layer. In some embodiments it is useful to cure or otherwise crosslink the adhesive layer that is providing the bonding. Crosslinked and cured layers are typically more stable to environmental conditions such as heat and humidity.

The adhesive and bonding layer may be one of at least one selected from the group consisting of thermally activated, pressure activated, chemically activated or UV light cured materials. Pressures sensitive adhesive are useful because they are easy to apply and are relatively inexpensive. Thermal sensitive adhesive are very useful and require the application of heat to activate their adhesive property. Many of these have a higher Tg than the PSA class of adhesive and in general are more resistance to changes in certain environmental conditions. Other means of adhesion and bonding of polymeric layer include the use of chemically crosslinked, UV light cured materials. The process of obtaining bonding force between said light guide and said bonding layer and between bonding layer and second side of said first polymeric film it is desirable to have a bonding force of at least 100 newton/m. Such a bonding force is useful in holding these layers together over a range of environmental conditions as well as resisting dimensional changes that occur over a range of operating and testing conditions.

The adhesive and said bonding layer may be at least one least one selected from the group consisting of acrylate, polyester, styrene, urethanes, acrylate monomers, oligimers and copolymer thereof or epoxies. Acrylate are useful material because they form a wide variety of adhesive while monomers and oligimers can be used for crosslinking applications. These types of adhesive are usually very hard and resistance to both physical and chemical stresses. In a useful embodiment of this invention wherein UV adhesive are used the material may further comprise at least one photoinitiator. The use of one or more photoinitiators is useful in being able to more fully cured or crosslink the monomers. Having a UV formula that provides an initial cure may provide a level of adhesion and it then be more fully cured.

The process of forming a light extraction unit wherein at least a portion of the light extraction features of said light extraction unit is embedded in the adhesive layer to at least one micron. While the feature may vary in their overall height, the light extraction features may be embedded in the adhesive at least between 7 to 30% of the extraction feature height.

The adhesive layer may have a thickness of between 6 to 18 microns. The process used to embed the light extraction features needs to provide a high level of embedment uniformity to assure that the illumination apparatus has an illumination uniformity of less than 10% of the average illumination of the display.

The process for forming the light extracting unit may comprise a plurality of light extracting features separated by regions of lower refractive index has a refractive index difference between said light extraction features and said separated regions of between 0.8 and 0.05. Having a high level of refractive index difference between the polymer of the features and the region between helps to provide a high level of efficiency

In another useful embodiment of this invention a display comprising an illumination apparatus comprising in order a light guide plate, a bonding interface, a light extraction unit.

As will be apparent to those skilled in the art, this same approach may also be applied to achieve desired non-uniform light distributions. In this case, the optical contact area is increased further in regions where higher than average brightness is desired and the optical contact area is decreased further in regions where lower than average brightness is desired.

### EXAMPLE 1

This example is going to describe a manufacturing process for a light extraction system for film in sheet form. All the work was completed in a Class 10,000 clean room.

A PMMA light guide plate (LGP) is obtained from an outside vendor and cut to dimensions of 127 millimeters by 247 millimeters. The thickness of the light guide plate is 6 millimeters. A piece of 3M^{™} Optically Clear Adhesive 8141 is cut to the same dimensions as the light guide plate. 3M™ Optically Clear Adhesive 8141 is a pressure sensitive adhesive. After the surface of the light guide plate is thoroughly cleaned, one release liner of the 3M™ 8141 is removed and the sample is adhered to the LGP.

The laminator used for this example was a Seal™400 with two 101.6-millimeter compliant rollers. For this adhesive, the process conditions on the laminator is set at 21°C, at a speed of 0.45 m/minute, and the pressure setting at 137.9 KPa. These process conditions were held constant throughout the experiment.

As the light guide plate and the 3M™ 8141 is moved into the nip of the laminator, the bottom release liner on the 3M™ 8141 is removed. This allows adhesion to take place between the light guide plate and the 3M™ 8141. This component of the Light Extraction System is complete and set aside for later optical coupling.

The second adhesive is prepared for the next process step. This second adhesive is prepared by adding 258 grams of MEK (Methyl Ethyl Keytone) with 42 grams of Estane 5703P, obtained from Neveon Inc, Cleveland OH. This material is coated onto a 127-millimeter wide roll of PET. Each solution was slot hopper coated at a laydown of 74.27 cm³/m² and dried by passing through a series of driers that ranged of 37.7 to 82.2°C. The machine speed was set at 3.048 m/minute. The solutions were allowed to dry and then wound at the end of the machine in roll form. The sample dried coating thicknesses was 6 micrometers. This wound roll is the set aside for a later optical coupling process step.

A light-extracting film with microprism structures on it was cut into the same dimensions as the light guide plate from earlier in the example.

The next process step was completed in a Class 10,000 clean room, however it doesn't need to be completed there. The second adhesive with the PET was cut into the same dimensions as the light extracting film with the microprisms. This process step uses the second adhesive film and the light extracting film with the microprisms. These two films were optically coupled with the microfeatures embedded into the adhesive to a depth of approximately 6 micrometers such that the microfeatures were hard-pressed against the PET support. The laminator used for this example was a Seal™400. Based on physical appearance and the approximate depth of the microfeatures embedded into the second adhesive, it was determined to have the process conditions for the thermal sensitive adhesive of the laminator set at 121°C, at a speed of 0.45 m/minute, and the pressure setting at medium. The laminator process conditions were held constant at their respective process conditions throughout the experiment.

The final process step optically coupled the light guide plate with the 3M™ 8141 to the film that contained the second adhesive, PET, and the embedded microprisms. The laminator used for this example was a Seal™400. The process conditions for this optical coupling had the laminator set at 121°C, at a speed of 0.45 m/minute, and the pressure setting at medium. The laminator process conditions were held constant at their respective process conditions throughout the experiment.

To evaluate the process for the Light Extraction System in sheet form, the width of the embedded microprisms were measured using a Nikon Measuring Microscope MM-40. The dimensions were measured using a Quadra-Chek 2000 instrument that was equipped with a Technoquip DCG-100A Digital Crosshair Generator to aid in accuracy. The desired width of the embedded microprisms is 17 micrometers with a tolerance of +/- 2 micrometers.

Using the process described in this example yielded uniform embedded microprisms along the entire surface area of the light guide plate. Width measurements were taken in approximate 10-millimeter increments. The results showed the embedded width of the microprisms averaged were within the acceptable tolerances for the system.

### Example 2

Five-inch wide PET and PMMA polymeric film were coated with various adhesive materials in an effort to understand the interaction between the adhesive thickness and the laminator process conditions. This interaction was characterized by measuring the prism embedment depth and peel strength of the light extracting film system. The solvent binder for each adhesive material is shown in Table 1. The materials were coated at various wet thicknesses on a heated platen at 55°C, as shown; to yield a known dried coating thickness. The materials were air-dried.

Kodak P-170^{™} was used as the light extracting film to evaluate the performance of the various adhesive materials. The P-170 material was optically coupled to various adhesive materials coated onto the PET polymeric film.

A PMMA light guide plate with the dimensions of 254 mm (length), 127 mm (width), and 6 mm (thickness) had a first optical adhesive layer applied to it. The first optical adhesive layer was a pressure sensitive adhesive, 3M™ Corporation brand 8142 with a release layer. This first optical adhesive layer was applied using a Seal™400 laminator with the pressure load set at 137.9 kilopascals, speed of 0.45 m/minute, a gap of 4.76 mm. Prior to adding on the polymeric film with the microprisms embedded into the adhesive layer, the release layer was peeled off the first optical adhesive layer.

A thermal sensitive and a-pressure sensitive adhesive were then prepared for this experiment. Each material was made up to 300 grams. Each solution was slot hopper coated at three laydowns: 74.27, 123.79, and 174.38 cm³/m² and heated on a heated platen at 55°C. The solutions were allowed to dry in place. The sample dried coating thicknesses were 6,10, and 14 micrometers. All the materials were coated onto PET and PMMA sheets.

The thermal sensitive adhesive contained 258 grams of MEK (Methyl Ethyl Keytone) and 42 grams of Estane 5703P, Neveon Inc, Cleveland OH. The pressure sensitive adhesive contained 124 grams of Ethyl Acetate, 82 grams of 3A Alcohol, and 94 grams of Gelva 2953, obtained from Cytec Industries, Midlothian VA.

All the work was completed in a Class 10,000 clean room. The laminator used for this example was a Seal™400. After some preliminary experiments to determine the process conditions, based on physical appearance and the approximate depth of the microfeatures embedded into the adhesive, it was determined to have the process conditions for the thermal sensitive adhesive of the laminator set at 121°C, at a speed of 0.45 m/minute, and the pressure setting at medium. The process conditions for the pressure sensitive adhesive was set at 21°C, at a speed of 0.45 m/minute, and the pressure setting at medium. The laminator process conditions were held constant at their respective process conditions throughout the experiment.

The average thickness is reported in Table 1. This is the average reading of nine measurements taken after the P-170 microprisms were embedded into the adhesive layer. The peel strength values were taken from using an Instron Model 4301. The values shown in Table 1 show the average Peel Strength value for 180-degree peel.

**Table 1**

| Part | Adhesive | Dried Thickness [µm] | Average Thickness [µm] | Peel Strength [N/m] |
|---|---|---|---|---|
| 1 | Estane 5703P | 6 | 11.3 | 18.2 |
| 2 | Estane 5703P | 10 | 24.0 | 39.0 |
| 3 | Estane 5703P | 14 | 36.7 | 60.8 |
| 4 | Gelva 2953 | 6 | 22.7 | 10.7 |
| 5 | Gelva 2953 | 10 | 25.1 | 42.1 |
| 6 | Gelva 2953 | 14 | 27.9 | 106.3 |

The key results from Table 1 are the average thickness and peel strengths for the different adhesives. This table shows that either adhesive material can be used in the manufacturing of the Light Directing Guide System, however the material choice and it's dried coating thickness will have an impact on product performance. Table 1 indicates the best choice of material choice and thickness is Estane 5703P at 6 micrometers since this yields the approximate average thickness that is necessary for the optical design, and also has an adequate peel strength value.

In view of this disclosure it is noted that the various methods and devices described herein can be implemented in a variety of applications. Further, the various materials, elements and parameters are included by way of example only and not in any limiting sense. In view of this disclosure, those skilled in the art can implement the present teachings in determining their own techniques and needed equipment to affect these techniques, while remaining within the scope of the appended claims.

### PARTS LIST:

10. Illumination apparatus
12. Light guide
14. Light source
16. Top surface
18. Bottom surface
20. Light extracting film
22. Input surface
24. Output surface
26. Light extracting feature
34. Apex
36. Bonding Layer
42. Micro-structured layer
43. Optical adhesive
44. Light accepting surface
100. Adhesive application step in manufacturing process
101. Drying/Curing step in manufacturing process
102. Winding step in manufacturing process
103. Film with microprisms step in manufacturing process
104. Optical coupling step of microprisms and adhesive in manufacturing process
105. Obtaining Light Guide in manufacturing process
106 Adhesive application to Light Guide Plate step in manufacturing process
107. Optical coupling step of microprisms /adhesive to Light Guide Plate/adhesive in manufacturing process
110. Finishing step in manufacturing process
112. Light gating device
114. Diffuser
115. In-line Optical coupling step of microprisms and adhesive in manufacturing process
116. Reflective polarizer
120. Display apparatus
121. In-line winding step of microprisms and adhesive in manufacturing process
125. Finishing step in manufacturing process of in-line winding step
130. polymeric film
140. Optical Adhesive
141 a release liner

## Claims

1. A backlight comprising in order a lightguide plate with a sidelit light source and bonded thereto a light extraction unit containing, in order from the lightguide plate, a first polymeric layer, an adhesive layer, a second polymeric layer bearing features at least partly embedded in the adhesive layer, wherein the materials of the first polymeric layer, the adhesive layer, and the second polymeric layer differ by less than 0.05 in refractive index, and the interstitial regions between the non-embedded portions of the features containing a material having a refractive index at least 0.1 lower than that of the material comprising the features.

2. The backlight of Claim 1 further comprises a bonding layer that bonds said lightguide plate and said first polymeric layer.

3. The backlight of Claim 1 wherein said interstitial regions between the non-embedded portion of the features comprises air.

4. A display comprising a backlight comprising in order a lightguide plate with a sidelit light source and bonded thereto a light extraction unit containing, in order from the lightguide plate, a first polymeric layer, an adhesive layer, a second polymeric layer bearing features only partly embedded in the adhesive layer wherein the materials of the first polymeric layer, the adhesive layer, and the second polymeric layer differ by less than 0.05 in refractive index, the interstitial regions between the non-embedded portions of the features containing a material having a refractive index at least 0.1 lower than that of the material of the features.

5. The display of Claim 4 further comprises at least one function selected from the grouping consisting of light diffusion, light collimation, light enhancement, light recycling, light polarization, light modulation and a light source.

6. The display of Claim 4 further comprises a solid sate lighting source.

7. The backlight of Claim 1 wherein said bonding layer and or said adhesive layer comprises at least one material selected from the group consisting of acrylate, polyester, styrene, urethanes, acrylate monomers, oligimers and copolymer thereof or epoxies.

8. The backlight of Claim 1 wherein said features are embedded in said adhesive layer at least between 7 to 30 % of the extraction feature height.

9. The backlight of Claim 1 wherein said features form an apex.

10. The backlight of Claim 1 wherein said features vary in their shape, size and or packing density as a function of the distance from the light source.
